(19) Europäisches Patentamt / European Patent Office / Office européen des brevets

(11) **EP 3 385 704 A1**

(12) **EUROPEAN PATENT APPLICATION**

(43) Date of publication:
**10.10.2018 Bulletin 2018/41**

(51) Int Cl.:
**G01N 23/20025** (2018.01)　　**G01N 23/207** (2018.01)

(21) Application number: **18164062.4**

(22) Date of filing: **26.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2017　JP 2017066350**

(71) Applicant: **Shimadzu Corporation
Kyoto 604-8511 (JP)**

(72) Inventor: **OGAWA, Rie
Kyoto-shi, Kyoto 6048511 (JP)**

(74) Representative: **Webster, Jeremy Mark et al
Mewburn Ellis LLP
City Tower
40 Basinghall Street
London EC2V 5DE (GB)**

(54) **X-RAY ANALYSIS APPARATUS**

(57)　Once the relative positions of an X-ray source and a detector are changed by a moving mechanism, a holding state changing mechanism changes the state where a sample is held by a sample holding portion in conjunction with the change such that a sample surface is arranged in an arc shape along the circumference of a focal circle. Accordingly, the sample surface can be along the circumference of the focal circle even when the size of the focal circle changes. As a result, the occurrence of an error in X-ray intensity can be prevented when an X-ray diffracted on the sample surface is detected by the detector, and accurate diffraction information can be obtained.

*FIG. 4*

## Description

Field

The present invention relates to an X-ray analysis apparatus for performing analysis by emitting X-rays to a sample.

Background

An X-ray analysis apparatus is provided with, for example, an X-ray source for emitting X-rays to a sample and a detector detecting the X-rays diffracted in the sample. X-ray analysis apparatuses of this type include an X-ray analysis apparatus performing analysis by relatively moving an X-ray source and a detector on a reference circle (so-called diffractometer circle) about a sample (refer to, for example, Patent Literature 1 below).

In the X-ray analysis apparatus that is disclosed in Patent Literature 1, the angle of incidence of the X-ray with respect to the surface of the sample changes as the sample rotates at a predetermined angular velocity (so-called θrotation). At this time, the detector rotates at twice the angular velocity of the θrotation (so-called 2θrotation). As a result, diffraction information is obtained in a state where the angle of incidence of the X-ray with respect to the sample and the angle of incidence of the X-ray diffracted in the sample on the detector maintain a certain relationship. In an X-ray analysis apparatus other than the X-ray analysis apparatus disclosed in Patent Literature 1, a sample is fixed (does not rotate) and each of an X-ray source and a detector moves on a diffractometer circle while keeping θ and 2θ relationships with respect to a sample surface. Also in this apparatus, diffraction information can be obtained in a state where the angle of incidence of the X-ray with respect to the sample and the angle of incidence of the X-ray diffracted in the sample on the detector maintain a certain relationship.

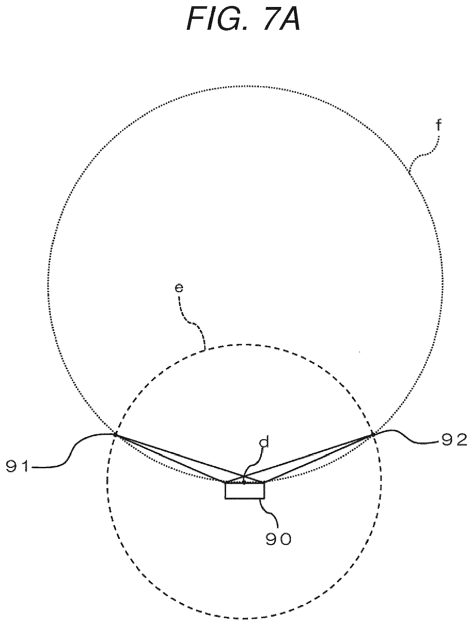

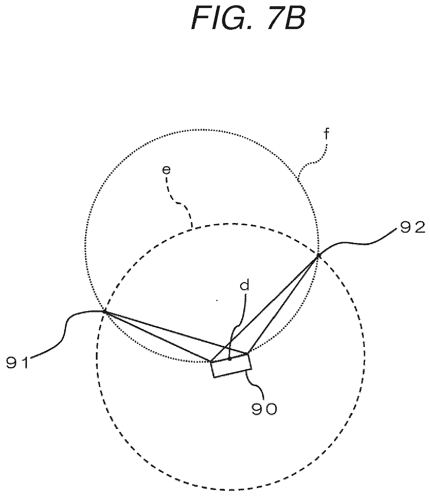

Fig. 7A is a schematic diagram illustrating the relative arrangement of a sample 90, an X-ray origin position 91, and an X-ray focusing position 92 in an X-ray analysis apparatus according to the conventional art, which shows a state where the sample 90, the X-ray origin position 91, and the X-ray focusing position 92 form a large angle. Fig. 7B is a schematic diagram illustrating the relative arrangement of the sample 90, the X-ray origin position 91, and the X-ray focusing position 92 in the X-ray analysis apparatus according to the conventional art, which shows a state where the sample 90, the X-ray origin position 91, and the X-ray focusing position 92 form a small angle.

In the analysis operation described above, the X-ray origin position of the X-ray source and the X-ray focusing position of the detector are positioned on the diffractometer circle and the center of the diffractometer circle (center of the sample surface), the X-ray origin position of the X-ray source, and the X-ray focusing position of the detector are positioned on the same focal circle.

Specifically, in Figs. 7A and 7B, the X-ray origin position 91 of the X-ray emitted from the X-ray source and the X-ray focusing position 92 of the detector are positioned on a diffractometer circle e about the sample 90. The X-ray origin position 91 of the X-ray emitted from the X-ray source, the X-ray focusing position 92 of the detector, and a center d of the surface of the sample 90 are positioned on a focal circle f.

[Patent Literature 1] JP-A-2014-228474

Summary

The analysis may not be performed with high accuracy with the X-ray analysis apparatus according to the conventional art as described above. Specifically, in the X-ray analysis apparatus according to the conventional art, the sample 90 is accommodated in a recessed or penetrative sample holder (not illustrated). Accordingly, the sample 90 is held such that an irradiation surface irradiated with X-rays is in a flat state at all times. During the analysis operation, in the meantime, the size (diameter) of the focal circle f changes as the sample 90 rotates as illustrated in Figs. 7A and 7B. As a result, the irradiation surface of the sample 90 that is a part other than the center d comes off the focal circle f. When the X-ray diffracted at this part (part other than the center d) is detected, an error occurs in the intensity of the detected X-ray and accurate diffraction information may not be obtained.

The present invention has been made in view of the above circumstances, and an object thereof is to provide an X-ray analysis apparatus with which analysis can be performed with high accuracy.

(1) An X-ray analysis apparatus according to the present invention includes a sample holding portion, an X-ray source, a detector, a moving mechanism, and a holding state changing mechanism. The sample holding portion holds a sample. The X-ray source emits X-rays toward the sample held in the sample holding portion. The detector receives the X-rays diffracted on a sample surface and condensed at a focusing position. The moving mechanism changes relative positions of the X-ray source and the focusing position on the same reference circle about a reference point on the sample surface. The holding state changing mechanism changes a state where the sample is held by the sample holding portion in conjunction with the change in the relative positions of the X-ray source and the focusing position by the moving mechanism such that the sample surface is arranged in an arc shape along a circumference of a focal circle passing through the X-ray source and the focusing position.

During an analysis operation by the X-ray analysis apparatus, the size (diameter) of the focal circle passing through the X-ray source and the focusing position changes in conjunction with the change in the relative positions of the X-ray source and the focusing position.

According to the configuration described above, the holding state changing mechanism changes the state where the sample is held by the sample holding portion in conjunction with the change in the relative positions of the X-ray source and the focusing position such that the sample surface is arranged in an arc shape along the circumference of the focal circle.

Accordingly, the X-ray irradiation surface (sample surface) of the sample can be along the circumference of the focal circle even when the size (diameter) of the focal circle changes.

As a result, the occurrence of an error in optical aberration can be prevented when the X-ray diffracted on the sample surface is detected, and accurate diffraction information can be obtained.

Therefore, with the X-ray analysis apparatus, the analysis can be performed with high accuracy.

(2) In addition, the sample holding portion may hold the sample in a plurality of divided holding regions. The holding state changing mechanism may change relative positions of the plurality of holding regions. According to this configuration, when the relative positions of the plurality of holding regions are changed by the holding state changing mechanism, the samples are unlikely to be biased toward one part and the sample surfaces are likely to be along the circumference of the focal circle.

Accordingly, the analysis can be performed with high accuracy.

(3) In addition, the plurality of holding regions may be interconnected. The holding state changing mechanism may integrally change the relative positions of the plurality of holding regions.

According to this configuration, the relative positions of the plurality of holding regions in the sample holding portion can be changed through a simple operation.

According to the present invention, the holding state changing mechanism changes the state where the sample is held by the sample holding portion such that the sample surface is arranged in an arc shape along the circumference of the focal circle. Accordingly, the sample surface can be along the circumference of the focal circle even when the size of the focal circle changes. As a result, the occurrence of an error in X-ray intensity can be prevented when the X-ray diffracted on the sample surface is detected, and accurate diffraction information can be obtained. Therefore, with the X-ray analysis apparatus, the analysis can be performed with high accuracy.

[Brief Description of the Drawings]

Fig. 1 is a schematic diagram illustrating a configuration of an X-ray analysis apparatus according to a first embodiment of the present invention;

Fig. 2 is a schematic diagram illustrating a configuration of a sample holding portion of Fig. 1;

Fig. 3 is a cross-sectional view taken along line A-A of Fig. 2;

Fig. 4 is a cross-sectional view illustrating the configuration of the sample holding portion and a configuration of a holding state changing mechanism;

Fig. 5 is a schematic diagram illustrating configurations of a sample holding portion and a holding state changing mechanism of an X-ray analysis apparatus according to a second embodiment of the present invention;

Fig. 6 is a cross-sectional view taken along line B-B of Fig. 5;

Fig. 7A is a schematic diagram illustrating the relative arrangement of a sample, an X-ray origin position, and an X-ray focusing position in an X-ray analysis apparatus according to the conventional art, which shows a state where the sample, the X-ray origin position, and the X-ray focusing position form a large angle; and

Fig. 7B is a schematic diagram illustrating the relative arrangement of the sample, the X-ray origin position, and the X-ray focusing position in the X-ray analysis apparatus according to the conventional art, which shows a state where the sample, the X-ray origin position, and the X-ray focusing position form a small angle.

Detailed Description of the Drawings

1. Overall Configuration of X-ray Analysis Apparatus

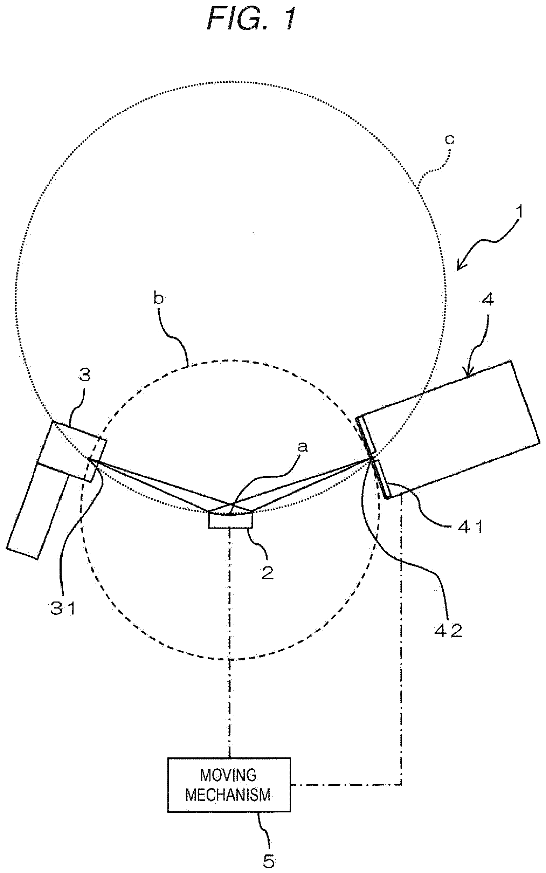

Fig. 1 is a schematic diagram illustrating a configuration of an X-ray analysis apparatus 1 according to a first embodiment of the present invention.

The X-ray analysis apparatus 1 is provided with a sample holding portion 2 holding a sample, an X-ray source 3 for emitting X-rays toward the sample held in the sample holding portion 2, and a detector 4 for detecting the X-rays diffracted on a sample surface.

The sample holding portion 2 is capable of rotating about a rotation axis a. In addition, the sample holding portion 2 is configured such that a surface of the sample holding portion 2 can be appropriately curved as described later. A plurality of regions (described later) are formed in the sample holding portion 2. The sample is held in the sample holding portion 2 by the sample being accommodated (filled) in the region.

The X-ray source 3 and the detector 4 are positioned on a diffractometer circle b about the sample held in the sample holding portion 2. The diffractometer circle b is a reference circle about a reference point on the surface of the sample held in the sample holding portion 2. The reference point corresponds to the rotation axis a of the sample holding portion 2.

The X-ray source 3 is configured to radiate the X-rays from an origin position 31 positioned on the diffractometer circle b.

The detector 4 is provided with a slit plate 41 that has a slit which has a predetermined width. The slit plate 41 is positioned on the diffractometer circle b. As a result, after the X-rays are diffracted in the sample held in the sample holding portion 2, only the X-rays passing through the slit of the slit plate 41 are detected by the detector 4. The position of the slit of the slit plate 41 is a focusing position 42.

In this example, the sample holding portion 2 is capable of rotating about the rotation axis a. In addition, the detector 4 is capable of rotating about the rotation axis a. Each of the sample holding portion 2 and the detector 4 is rotated by a moving mechanism 5. As a result, analysis can be performed by the X-ray source 3 and the detector 4 being relatively moved on the diffractometer circle b (by the relative positions of the X-ray source 3 and the detector 4 being changed). The moving mechanism 5 is configured to be provided with a driving source such as a motor (not illustrated) and is capable of causing the sample holding portion 2 and the detector 4 to rotate in synchronization with each other.

The moving mechanism 5 is not limited to the configuration in which the sample holding portion 2 and the detector 4 are rotated with respect to the X-ray source 3 that is stationary. The moving mechanism 5 may also be configured to, for example, rotate the X-ray source 3 and the detector 4 about the rotation axis a in a state where the sample holding portion 2 is stationary or rotate the sample holding portion 2 and the X-ray source 3 about the rotation axis a in a state where the detector 4 is stationary.

Once an analysis operation is initiated in the X-ray analysis apparatus 1, the X-rays are emitted from the X-ray source 3 toward the sample holding portion 2. At this time, the X-rays are radiated to spread from the origin position 31. The sample holding portion 2 rotates at a predetermined angular velocity about the rotation axis a (so-called θrotation). As a result, the angle of incidence of the X-ray from the X-ray source 3 with respect to the surface of the sample held by the sample holding portion 2 changes. In addition, the detector 4 rotates on the diffractometer circle b at twice the angular velocity of the θrotation (so-called 2θrotation). As a result, diffraction information is obtained in a state where the angle of incidence of the X-ray from the X-ray source 3 with respect to the sample held by the sample holding portion 2 and the angle of incidence of the X-ray diffracted in the sample held by the sample holding portion 2 on the detector 4 (angle of incidence on the focusing position 42) maintain a certain relationship.

As described above, the relative positions of the origin position 31 of the X-ray source 3 and the focusing position 42 of the detector 4 change during the analysis by the X-ray analysis apparatus 1. In addition, the origin position 31 of the X-ray source 3, the focusing position 42 of the detector 4, and the reference point (rotation axis a) of the surface of the sample held by the sample holding portion 2 are positioned on a focal circle c. The size (diameter) of the focal circle c changes in conjunction with the change in the relative positions of the origin position 31 of the X-ray source 3 and the focusing position 42 of the detector 4.

For the analysis by the X-ray analysis apparatus 1 to be performed with high accuracy, it is desirable that the X-ray received by the detector 4 is diffracted in the sample (sample surface) positioned on the focal circle c.

Accordingly, the sample holding portion 2 is configured and operated as follows.

2. Configuration of Sample Holding Portion

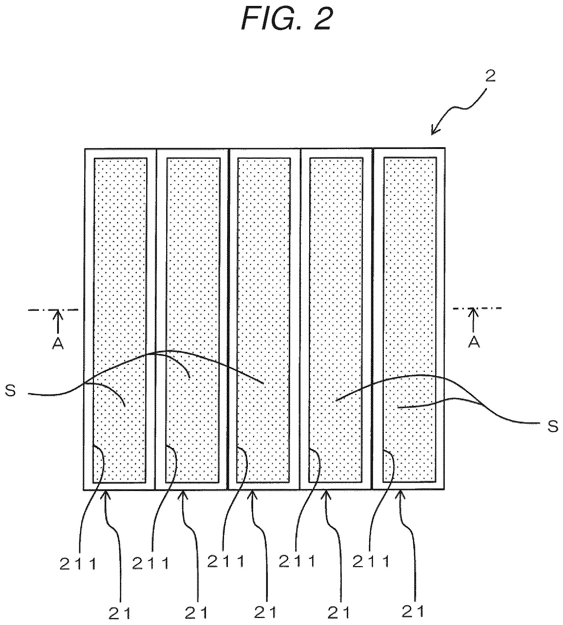

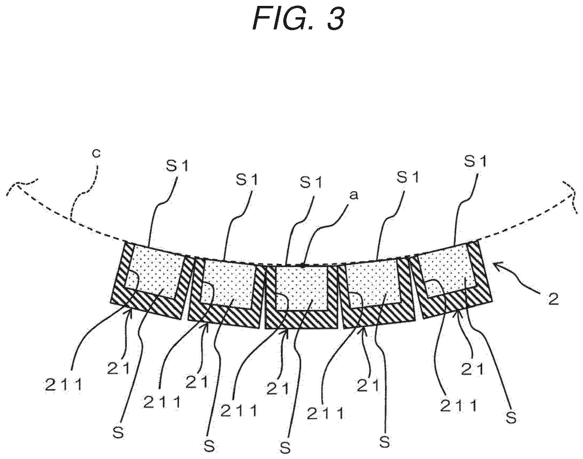

Fig. 2 is a schematic diagram illustrating a configuration of the sample holding portion 2. Fig. 3 is a cross-sectional view taken along line A-A of Fig. 2.

The sample holding portion 2 is provided with a plurality of sample holders 21. Each sample holder 21 has a U-shaped cross section and an elongated frame shape in which a lower surface is blocked and an upper surface is open. Each sample holder 21 is formed of, for example, single crystal silicon or glass. The internal space of each sample holder 21 is a holding region 211. In other words, the cross section of the holding region 211 is recessed in a U shape inward from the upper surface of the sample holder 21. A sample S is accommodated (filled) in the holding region 211 of each sample holder 21. In this manner, the sample holding portion 2 holds the samples S in a plurality of the divided holding regions 211.

The sample holders 21 extend in the same direction (up-down direction in Fig. 2), and the open ends (openings) of the holding regions 211 are positioned on the upper side. The plurality of sample holders 21 are arranged to be in parallel in a width direction orthogonal to a longitudinal direction. The plurality of sample holders 21 are separated from one another. As described later, each sample holder 21 is configured to be capable of moving independently of the other sample holders 21. A surface S1 of the sample S held by each sample holder 21 is positioned on the focal circle c by each sample holder 21 being appropriately moved.

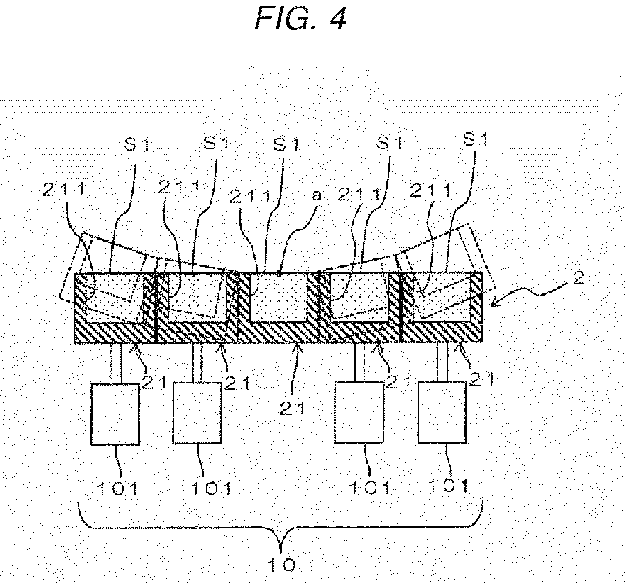

Fig. 4 is a cross-sectional view illustrating the configuration of the sample holding portion 2 and a configuration of a holding state changing mechanism 10.

Each of the plurality of sample holders 21 except for the middle sample holder 21 (sample holder 21 that is closest to the rotation axis a) can be rotated or moved for the angle thereof to be changed.

The holding state changing mechanism 10 is provided with a plurality of motors 101. The motors 101 make pairs with the respective sample holders 21 except for the middle sample holder 21. The sample holders 21 except for the middle sample holder 21 are rotated or moved as a result of driving force application from the respective motors 101.

3. Operation of Sample Holding Portion

During the analysis by the X-ray analysis apparatus 1, the relative positions of the X-ray source 3 and the detector 4 are changed by the moving mechanism 5 and the size (diameter) of the focal circle c changes in conjunction with the change in the relative positions as described above. Assuming that the radius of the diffractometer circle b is r and the rotation angle of the sample holding portion 2 is θ, a radius R of the focal circle c is represented by the following Equation (1).

$$R = r/2\sin\theta \qquad (1)$$

Once the analysis operation is initiated in the X-ray analysis apparatus 1, the holding state changing mechanism 10 calculates the radius R from the Equation (1). Then, the holding state changing mechanism 10 operates each sample holder 21 by driving each motor 101 such that the surface S1 of the sample S held by each sample holder 21 is along the circumference of the focal circle c that has the calculated R as the radius thereof. As a result, the surfaces S1 of the samples S held in the sample holding portion 2 are arranged (curved) in an arc shape. The rotation axis a is positioned in the width-direction middle of the surface S1 of the sample S held by one of the plurality of sample holders 21 that is positioned in the width-direction middle.

In this manner, the holding state changing mechanism 10 changes the state where the sample S is held by the sample holding portion 2 in conjunction with the change in the relative positions of the X-ray source 3 and the detector 4. In other words, the holding state changing mechanism 10 changes the relative positions of the plurality of holding regions 211 of the sample holding portion 2 in conjunction with the change in the relative positions of the X-ray source 3 and the detector 4.

As a result, the surfaces S1 of the samples S are arranged on the circumference of the focal circle c with a changing size at all times.

In this manner, the X-rays diffracted on the surfaces S1 of the samples S positioned on the circumference of the focal circle c are received by the detector 4 during the analysis by the X-ray analysis apparatus 1. Accordingly, with the X-ray analysis apparatus 1, the analysis of the samples S is performed with high accuracy.

4. Action and Effect

(1) In the present embodiment, the holding state changing mechanism 10 changes the state where the sample S is held by the sample holding portion 2 in conjunction with the change in the relative positions of the X-ray source 3 and the detector 4 (focusing position 42) such that the surfaces S1 of the samples S are arranged in an arc shape along the circumference of the focal circle c as illustrated in Fig. 4.

Accordingly, the X-ray irradiation surface of the sample S (surface S1 of the sample S) can be along the circumference of the focal circle c even when the size (diameter) of the focal circle c changes.

As a result, the occurrence of an error in optical aberration can be prevented when the X-ray diffracted on the surface S1 of the sample S is detected by the detector 4, and accurate diffraction information can be obtained.

Therefore, with the X-ray analysis apparatus 1, the analysis can be performed with high accuracy.

(2) In addition, in the present embodiment, the sample holding portion 2 holds the samples S in the plurality of divided holding regions 211 as illustrated in Fig. 4. The holding state changing mechanism 10 changes the relative positions of the plurality of holding regions 211.

Accordingly, when the relative positions of the plurality of holding regions 211 are changed by the holding state changing mechanism 10, the samples S are unlikely to be biased toward one part and the surfaces S1 of the samples S are likely to be along the circumference of the focal circle c.

As a result, the analysis can be performed with high accuracy.

5. Second Embodiment

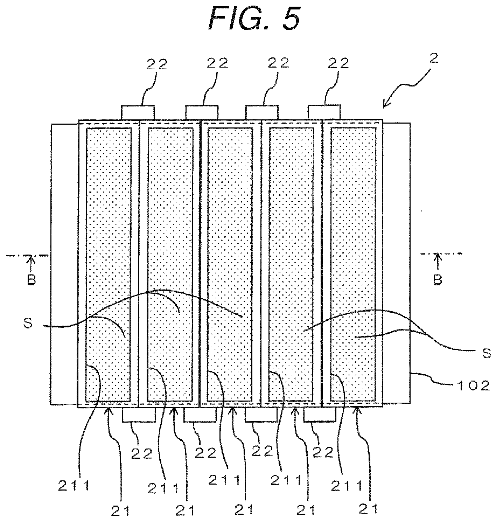

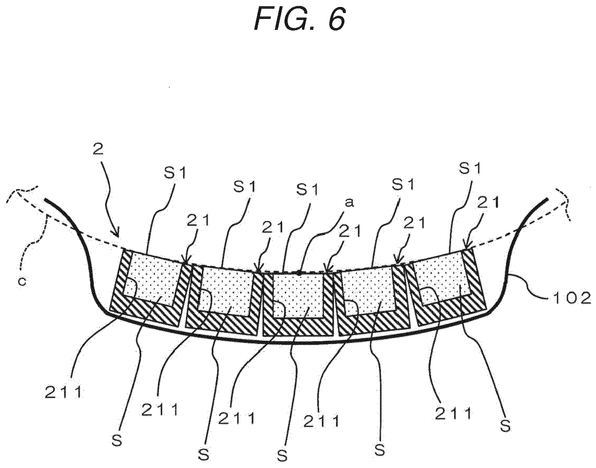

A second embodiment of the present invention will be described below with reference to Figs. 5 and 6. The same reference numerals will be used to refer to the same configurations as in the first embodiment, and description thereof will be omitted.

(1) Configurations of Sample Holding Portion and Holding State Changing Mechanism

Fig. 5 is a schematic diagram illustrating the configurations of the sample holding portion 2 and the holding state changing mechanism 10 of the X-ray analysis apparatus 1 according to the second embodiment of the present invention. Fig. 6 is a cross-sectional view taken along line B-B of Fig. 5.

In the first embodiment described above, the relative positions of the plurality of holding regions 211 are changed by each sample holder 21 being moved independently of the other sample holders 21. In the second embodiment, in contrast, the relative positions of the plurality of holding regions 211 are integrally changed by the plurality of sample holders 21 being integrally moved.

Specifically, in the second embodiment, the sample holding portion 2 is provided with a plurality of connecting members 22. Each connecting member 22 is disposed in a longitudinal-direction end portion of the sample holder 21 that is adjacent thereto. Each connecting member 22 is connected in a state where the adjacent sample holder 21 can be relatively moved. The connecting members 22 may also relatively move the plurality of sample holders 21 by being deflected by being formed of, for example, a flexible material. In addition, the connecting members 22 may also connect the plurality of sample holders 21 in a relatively movable manner by hinge members or the like constituting the connecting members 22.

The holding state changing mechanism 10 is provided with a holding member 102 instead of the motor 101 described above. The holding member 102 is a flexible member that has a constant thickness. Each sample holder 21 is placed (held) in the holding member 102.

Once the analysis operation is initiated in the X-ray analysis apparatus 1, the holding state changing mechanism 10 deflects the holding member 102 such that the surface S1 of the sample S held by each sample holder 21 is along the circumference of the focal circle c that has the R calculated from the Equation (1) above as the radius thereof. As a result, the surfaces S1 of the samples S held in the sample holding portion 2 are arranged in an arc shape.

In this manner, the relative positions of the plurality of holding regions 211 are integrally changed by the plurality of sample holders 21 being integrally moved.

(2) Action and Effect of Second Embodiment

In the second embodiment, the plurality of sample holders 21 (plurality of holding regions 211) are interconnected by the connecting members 22 as illustrated in Fig. 5. The holding state changing mechanism 10 integrally changes the relative positions of the plurality of holding regions 211 by deflecting the holding member 102 as illustrated in Fig. 6.

Accordingly, the relative positions of the plurality of holding regions 211 in the sample holding portion 2 can be changed through a simple operation.

6. Modification Example

According to the description of the embodiments described above, the holding state changing mechanism 10 changes the state where the sample S is held by the sample holding portion 2 by applying the driving force of the motor 101 to each sample holder 21 or changes the state where the sample S is held by the sample holding portion 2 by deflecting the holding member 102 holding each sample holder 21. However, the holding state changing mechanism 10 may change the state where the sample S is held by the sample holding portion 2 such that the surfaces S1 of the samples S are arranged in an arc shape along the circumference of the focal circle c, and the configuration that realizes the change is not limited to the above.

In addition, although the sample holding portion 2 holds the sample S by using the plurality of divided sample holders 21 according to the description of the embodiments described above, the configuration of the sample holding portion 2 is not limited thereto. For example, the sample holding portion 2 may also be deformed in an arc shape by being deflected with one flexible sample holder constituting the sample holding portion 2.

According to the description of the embodiments described above, the detector 4 detects the X-rays passing through the slit of the slit plate 41. However, the detector 4 is not limited to a detector that detects the X-rays passing through the slit of the slit plate 41 and may also be a detector that detects X-rays with each of a plurality of light receiving elements arranged side by side on a straight line. In this case, the central position of the light receiving surface that is formed by the plurality of light receiving elements is the focusing position.

**Claims**

1. An X-ray analysis apparatus comprising:

   a sample holding portion holding a sample;
   an X-ray source emitting X-rays toward the sample held in the sample holding portion;
   a detector receiving the X-rays diffracted on a sample surface and condensed at a focusing position;
   a moving mechanism changing relative positions of the X-ray source and the focusing position on the same reference circle about a reference point on the sample surface; and
   a holding state changing mechanism changing a state where the sample is held by the sample holding portion in conjunction with the change in the relative positions of the X-ray source and the focusing position by the moving mechanism such that the sample surface is arranged in an arc shape along a circumference of a focal circle passing through the X-ray source and the focusing position.

2. The X-ray analysis apparatus according to claim 1, wherein the sample holding portion holds the sample in a plurality of divided holding regions, and wherein the holding state changing mechanism changes relative positions of the plurality of holding regions.

3. The X-ray analysis apparatus according to claim 2, wherein the plurality of holding regions are interconnected, and

wherein the holding state changing mechanism integrally changes the relative positions of the plurality of holding regions.

# FIG. 1

# FIG. 2

# FIG. 3

FIG. 4

## FIG. 5

# FIG. 6

## FIG. 7A

## FIG. 7B

Europäisches
Patentamt

European
Patent Office

Office européen
des brevets

# EUROPEAN SEARCH REPORT

Application Number

EP 18 16 4062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S58 2725 A (KAWASAKI STEEL CO) 8 January 1983 (1983-01-08) * the whole document * | 1 | INV. G01N23/20025 G01N23/207 |
| X | US 3 148 275 A (MARIAN MACK) 8 September 1964 (1964-09-08) * column 1, line 33 - column 3, line 11; figures 1-3 * | 1 | |
| X | US 3 427 451 A (SPIELBERG NATHAN) 11 February 1969 (1969-02-11) * column 1, line 72 - column 3, line 2; figures 1, 2 * | 1 | |
| A | US 2 452 045 A (HERBERT FRIEDMAN) 26 October 1948 (1948-10-26) * column 2, line 20 - column 5, line 13; figures 1-8 * * column 6, line 69 - column 7, line 56 * | 1-3 | |
| A | VOGMAN V A ET AL: "DEVICE FOR BIAXIAL BENDING OF SPECIMENS IN X-RAY OPTICAL RESEARCH", INSTRUMENTS AND EXPERIMENTAL TECHNIQUES, CONSULTANTS BUREAU. NEW YORK, US, vol. 27, no. 4, July 1984 (1984-07), pages 1041-1044, XP001417090, ISSN: 0020-4412 * the whole document * | 1-3 | TECHNICAL FIELDS SEARCHED (IPC) G01N |

The present search report has been drawn up for all claims

| Place of search | Date of completion of the search | Examiner |
|---|---|---|
| The Hague | 17 August 2018 | Pagels, Marcel |

EP 3 385 704 A1

## ANNEX TO THE EUROPEAN SEARCH REPORT
## ON EUROPEAN PATENT APPLICATION NO.

EP 18 16 4062

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2018

| Patent document cited in search report | | Publication date | Patent family member(s) | | Publication date |
|---|---|---|---|---|---|
| JP S582725 | A | 08-01-1983 | NONE | | |
| US 3148275 | A | 08-09-1964 | DE | 1289334 B | 13-02-1969 |
| | | | GB | 979952 A | 06-01-1965 |
| | | | US | 3148275 A | 08-09-1964 |
| US 3427451 | A | 11-02-1969 | NONE | | |
| US 2452045 | A | 26-10-1948 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014228474 A